Europäisches Patentamt

European Patent Office

Office européen des brevets

(19)

(11) Numéro de publication: **0 272 975**
**A2**

(12) ## DEMANDE DE BREVET EUROPEEN

(21) Numéro de dépôt: **87402803.8**

(22) Date de dépôt: **10.12.87**

(51) Int. Cl.⁴: **C 08 F 283/00**
C 08 L 75/04
//(C08F283/00,220;14)

(30) Priorité: **11.12.86 FR 8617327**

(43) Date de publication de la demande:
**29.06.88 Bulletin 88/26**

(84) Etats contractants désignés:
**AT BE CH DE ES FR GB GR IT LI LU NL SE**

(71) Demandeur: **ALTULOR S.A.**
**Tour Gan - Place de l'Iris**
**F-92082 Paris la Defense (FR)**

(72) Inventeur: **Leca, Jean-Paul**
**224 Boulevard du Maréchal Juin**
**F-78200 Mantes La Jolie (FR)**

**Avenel, Michel**
**6 Square du Cours Renault**
**F-27140 Gisors (FR)**

(74) Mandataire: **Dubost, Thierry Pierre**
**SOCIETE CHIMIQUE DES CHARBONNAGES Service**
**Propriété Industrielle B.P. 57**
**F-62670 Mazingarbe (FR)**

(54) **Plaques coulées à haute résistance au choc, leur procédé de fabrication et articles façonnés obtenus.**

(57) On introduit dans un moule un mélange de méthacrylate de méthyle, d'au moins un initiateur de polymérisation radicalaire, d'au moins un composé organique comportant au moins deux fonctions isocyanates, d'au moins un agent de réticulation du méthacrylate de méthyle, d'au moins un polyol susceptible de constituer un réseau polyuréthanne avec les fonctions isocyanates du composé organique et d'au moins un catalyseur susceptible de permettre la formation dudit réseau polyuréthanne, le rapport des composants du réseau polyuréthanne à la somme de ces composants et du méthacrylate de méthyle étant compris entre 5% et 35% en poids, puis on soumet le moule à des conditions de pression et température propres à permettre successivement la formation du réseau polyuréthanne puis la polymérisation du méthacrylate de méthyle dans ledit réseau.
Application à l'obtention de plaques résistant au tir de balles.

FIGURE UNIQUE

EP 0 272 975 A2

**Description**

PLAQUES COULEES A HAUTE RESISTANCE AU CHOC, LEUR PROCEDE DE FABRICATION ET ARTICLES
FACONNES OBTENUS.

Les plaques coulées à base de polyméthacrylate de méthyle sont déjà bien connues et ont trouvé des applications extrêmement variées, notamment dans les domaines où l'on utilisait jusque là des plaques de verre, en raison de leur transparence, de leur légèreté et de leur prix de revient. Toutefois il est également bien connu que ces plaques présentent :
- une résistance au choc inférieure à celle du verre de sécurité et d'autres matériaux polymères tels que le polycarbonate.
- une inflammabilité et une résistance au tir de balle inférieures à celle du polycarbonate.

Le problème que la présente invention s'est attaché à résoudre consiste à mettre au point un procédé de fabrication de plaques coulées à base de polyméthacrylate de méthyle permettant d'obtenir des plaques présentant une résistance au choc, une inflammabilité, une tenue au vieillissement, une résistance au tir de balle et des propriétés optiques améliorées par rapport à celles des plaques traditionnelles, ou tout au moins présentant un meilleur équilibre pour l'ensemble de ces propriétés.

On connaît déjà par le brevet américain n° 3.859.381 un procédé de production d'un matériau élastomère à partir d'une composition homogène comprenant de 50 % à 95 % en poids des précurseurs d'un polyuréthane réticulé et de 50 % à 5 % en poids d'au moins un composé polymérisable éthyléniquement insaturé, selon lequel les percurseurs du polyuréthane sont soumis à une réaction substantiellement complète avant que la polymérisation du composé éthyléniquement insaturé ne commence, et selon lequel les précurseurs, lorsqu'ils sont soumis à réaction en l'absence de composé éthyléniquement insaturé, sont capables de former un polyuréthane élastomère réticulé ayant une température de transition vitreuse (Tg) au plus égale à 25° C. Par matériau élastomère, ce document entend une matière capable d'être allongée à au moins 200 % de sa longueur d'origine et qui, lorsqu'on relâche la contrainte exercée, revient essentiellement à sa longueur d'origine.

On connaît également par le brevet américain n° 4.098.733 un procédé de préparation d'articles composites en polymères de polyuréthanne/vinyliques comprenant :
- le mélange d'un polyol liquide, d'un polyisocyanate, d'un catalyseur destiné à la formation de l'uréthanne, d'un monomère à insaturation éthylénique et d'un catalyseur pour la polymérisation du monomère à insaturation éthylénique,
- la coulée du mélange réactionnel dans un moule pour l'y laisser réagir et solidifier, et
- le démoulage des articles ainsi obtenus du moule, procédé selon lequel on n'utilise pas plus de 60 % en poids du monomère à insaturation éthylénique, sur base des poids réunis du polyol, du polyisocyanate et du monomère à insaturation éthylénique. Ce procédé, grâce auquel la polymérisation de l'uréthane et la polymérisation vinylique s'opèrent sensiblement simultanément de façon à permettre le démoulage au plus 15 minutes après le mélange complet de tous les ingrédients, permet d'obtenir des articles possédant un allongement inférieur à 100 %.

Il convient de remarquer ici que, si le méthacrylate de méthyle figure parmi les monomères éthyléniquement insaturés envisagés tant par le brevet US-A-3.859.381 que par le brevet US-A-4.098.733, aucun de ces documents ne décrit la possibilité d'obtenir des articles transparents et à haute résistance au choc à base de polyméthacrylate de méthyle. Ceci est la raison pour laquelle le problème énoncé précédemment est resté sans solution jusqu'à présent.

Un premier objet de la présente invention consiste en un procédé de fabrication de plaques coulées à haute résistance au choc, à base de polyméthacrylate de méthyle, comprenant l'introduction dans un moule d'un mélange de méthacrylate de méthyle, d'une quantité efficace d'au moins un initiateur de polymérisation radicalaire, d'une quantité efficace d'au moins un composé organique comportant au moins deux fonctions isocyanates, d'une quantité efficace d'au moins un agent de réticulation du méthacrylate de méthyle, d'au moins un polyol susceptible de constituer un réseau polyuréthanne élastomérique avec les fonctions isocyanates du composé organique et d'une quantité efficace d'au moins un catalyseur susceptible de permettre la formation dudit réseau polyuréthanne, le rapport des composants du réseau polyuréthanne (c'est-à-dire la somme du composé organique à fonctions isocyanates et du polyol) à la somme de ces composants et du méthacrylate de méthyle étant compris entre 5 % et 35 % en poids, de préférence entre 10 % et 30 % en poids, puis la mise en jeu, dans le moule, de conditions de pression et température propres à permettre successivement la formation du réseau polyuréthanne puis la polymérisation du méthacrylate de méthyle dans ledit réseau, à la suite de quoi on laisse refroidir le mélange polymérisé dans le moule avant de procéder au démoulage de la plaque coulée. Un mode de réalisation de ce procédé consiste à préparer en premier lieu deux solutions de méthacrylate de méthyle. La première solution, dite solution (A), peut comprendre, outre le méthacrylate de méthyle :
- un initiateur de polymérisation radicalaire pouvant être notamment choisi parmi les persulfates, les peroxydes, les hydroperoxydes et les composés diazoïques tels que par exemple l'azobis-isobutyronitrile, le 2,2'-azobis(2,4-diméthylvaléronitrile), le 1,1'-azobis-1-cyclohexanecarbonitrile, le perbenzoate de tertiobutyle, le peroxy-isopropylcarbonate de tertio-butyle, etc. Lorsqu'un persulfate est choisi en tant qu'initiateur, il peut être utilisé en combinaison avec au moins un réducteur choisi parmi les polyhydrophénols, le sulfite et le bisulfite de sodium, le diméthylaminopropionitrile, les diazomercaptans et les ferricyanures. L'initiateur et, le cas échéant, le réducteur sont utilisables à raison d'environ 0,01 % à 2 % chacun en poids par rapport à la quantité totale du méthacrylate de méthyle présent dans les solutions (A) et (B).

- un composé organique comportant au moins deux fonctions isocyanates. Ce composé peut être difonctionnel, trifonctionnel ou même d'une fonctionnalité supérieure. 11 peut être aliphatique, cycloaliphatique ou aromatique ou même comprendre des groupes de plusieurs de ces catégories. Parmi des exemples de tels composés on peut citer des diisocyanates de structure

OCN - R - NCO,

dans laquelle R est une chaine alkylène possédant de 4 à 8 atomes de carbone, et leurs oligomères, ainsi que le 4,4'-diphénylméthane diisocyanate, les 2,4- et 2,6-toluène diisocyanates, l'isophorone diisocyanate et le 4,4'-dicyclohexylméthane diisocyanate.

La seconde solution, dite solution (B), peut comprendre, outre le méthacrylate de méthyle :
- au moins un polyol susceptible de réagir avec les fonctions isocyanates du composé organique présent dans la solution (A) pour former, dans certaines conditions, un réseau polyuréthanne élastomérique. Un tel polyol peut être choisi parmi les polyéthers glycols et les polyesters glycols et a de préférence un poids moléculaire au moins égal à 1.000.
- un catalyseur capable de favoriser la formation du réseau polyuréthanne lorsque le polyol entre en contact du composé à fonctions isocyanates. Pour que, quelles que soient les conditions de température au moment du contact, la formation de ce réseau polyuréthanne ne soit pas empêchée ou retardée, il est souhaitable que ce catalyseur soit choisi de manière à ne pas former un couple Redox avec l'initiateur de polymérisation du méthacrylate de méthyle. Ce catalyseur, dont on peut citer à titre d'exemple l'octoate stanneux et le dibutyl dilaurate d'étain, est de préférence utilisé dans une proportion comprise entre 0,1 % et 8 % environ par rapport à la somme du polyol et du composé à fonctions isocyanates.

Chacune des solutions (A) et (B) peut comprendre en outre :
- une quantité efficace d'au moins un agent ignifugeant, tel que notamment le méthacrylate de tribromophényle ou des composés organophosphorés comme ceux décrits dans les brevets EP-A-117.174 et FR-A-2.567.127,
- au moins un pigment soluble dans le méthacrylate de méthyle,
- au moins un comonomère éthyléniquement insaturé copolymérisable avec le méthacrylate de méthyle, tel que par exemple styrène, α-méthylstyrène, tertiobutylstyrène, acrylate de n-butyle, acrylate de 2-éthylhexyle, méthacrylate de n-butyle, acrylate de méthyle, acrylate d'éthyle, méthacrylate d'éthyle ou vinyltoluène, en une proportion totale de préférence au plus égale à 20 % en poids par rapport à la quantité totale de méthacrylate de méthyle présent dans les solutions (A) et (B).
- une quantité efficace d'au moins un agent de démoulage tel que, par exemple, l'acide stéarique, le dioctylsulfosuccinate de sodium et les esters phosphoriques organiques (comme par exemple le PHOSPAC D10N commercialisé par la société PROTEX). Cet agent de démoulage est généralement utilisé à raison d'environ 0,01 % à 2 % en poids par rapport à la quantité totale de méthacrylate de méthyle présent dans les solutions (A) et (B). La présence d'un tel agent de démoulage est plus particulièrement recommandée lorsque le moule utilisé est constitué d'un verre minéral et/ou lorsque l'on désire obtenir des plaques planes transparentes possédant un parfait état de surface.
- au moins un agent réticulant en quantité suffisante, plus particulièrement en quantité au moins égale à environ 1% en poids et de préférence au plus égale à 5% en poids par rapport à la quantité totale de méthacrylate de méthyle présent dans les solutions (A) et (B). Comme agent réticulant on peut utiliser par exemple :

    1) des composés ayant au moins deux doubles liaisons polymérisables et,

    2) des composés ayant au moins une double liaison liaison polymérisable et au moins un groupe fonctionnel réactif avec le méthacrylate de méthyle et, le cas échéant, son comonomère.

Comme exemples des composés répertoriés en premièrement ci-dessus, ayant au moins deux doubles liaisons polymérisables, on peut citer :

    a) les composés di- ou polyvinyliques, tels que notamment le divinylbenzène, le divinyltoluène, le divinylxylène, l'éther divinylique, la divinylcétone et le trivinylbenzène,

    b) les di- ou polyesters d'acides mono- ou polycarboxyliques insaturés avec des polyols, tels que les esters des acides di- ou tri(méth)acryliques avec des polyols (tels que l'éthylène glycol, le triméthylolpro pane, le glycérol, les polyoxyéthylèneglycols, les polyoxypropylèneglycols, etc.), les polyesters insaturés (que l'on peut obtenir par réaction de l'un quelconque des polyols précités avec un acide insaturé tel que l'acide maléique), etc.

    c) les bis (méth)acrylamides tels que la N,N-méthylène-bis-acrylamide,

    d) les esters carbamyliques que l'on peut obtenir en faisant réagir des polyisocyanates (tels que le toluène diisocyanate, l'hexaméthylène diisocyanate, le 4,4'-diphénylméthanediisocyanate, ainsi que les prépolymères contenant un groupe NCO obtenus en faisant réagir un tel diisocyanate avec des composés contenant des atomes d'hydrogène actifs) avec des monomères contenant des groupes hydroxyles. De tels esters sont notamment ceux des acides di(méth)acryliques que l'on peut obtenir en faisant réagir les diisocyanates précités avec le (méth)acrylate d'hydroxyéthyle,

    e) les éthers di- ou poly(méth)allyliques de polyols tels que les alkylèneglycols, les hydrates de carbones etc), tels que l'éther diallylique du polyéthylène glycol, l'amidon allylé et la cellulose allylée,

    f) les esters di- ou polyallyliques d'acides polycarboxyliques tels que le phtalate de diallyle, l'adipate de diallyle etc., et

g) les esters d'acides mono- ou polycarboxyliques insaturés avec des éthers mono(méth)allyliques de polyols, tels que l'ester de l'acide (méth)acrylique avec l'éther monoallylique du polyéthylène glycol.

Comme composés répertoriés en deuxièmement ci-dessus, ayant au moins une double liaison polymérisable et au moins un groupe fonctionnel réactif avec le méthacrylate de méthyle et, le cas échéant, son comonomère, on peut citer la N-méthylol(méth)acrylamide, le (méth)acrylate de glycidyle, etc.

- une quantité efficace d'au moins un limiteur de chaîne pouvant notamment être choisi parmi les terpènes monocyliques diinsaturés et les terpènes bicycliques mono-insaturés, de préférence en proportion comprise entre 0,05% et 1% environ en poids par rapport à la quantité totale de méthacrylate de méthyle présent dans les solutions (A) et (B).

- une quantité efficace d'au moins un absorbeur de rayonnement ultraviolet, de préférence choisi de manière à ne pas être susceptible de réagir avec les constituants et/ou avec le catalyseur permettant la formation du réseau polyuréthanne.

Il peut être souhaitable, notamment pour éviter que des bulles d'air ne soient occluses dans les plaques coulées (nuisant ainsi à leur transparence), que l'une et/ou l'autre des solutions (A) et (B) soit dégazée sous vide partiel, par exemple sous une pression de 25 à 250 millibars environ.

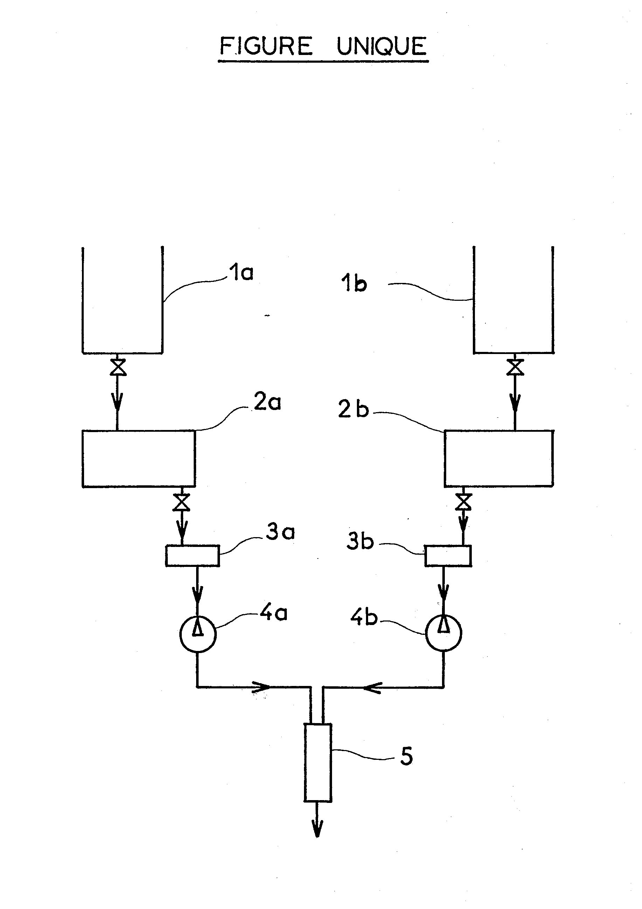

Selon ce mode de réalisation du procédé selon l'invention, les deux solutions (A) et (B) sont mélangées, puis leur mélange est introduit dans un moule, par exemple au moyen de l'installation représentée sur la figure en annexe. Cette installation comprend des mélangeurs (1a) et (1b) dans lesquels sont respectivement préparées les solutions (A) et (B), des désaérateurs (2a) et (2b) dans lesquels les solutions ainsi préparées sont dégazées, des filtres (3a) et (3b) pour la séparation des particules solides éventuellement présentes dans les solutions dégazées, et des pompes doseuses (4a) et (4b) au moyen desquelles les quantités désirées des solutions (A) et (B) dégazées et filtrées sont envoyées vers le mélangeur statique (5).

Pour favoriser le démoulage de la plaque coulée, il peut être souhaitable de prévoir un moule constitué d'un verre minéral traité de manière à éviter une réaction entre les fonctions Si-O du verre et les fonctions NCO de l'isocyanate, par exemple un verre minéral revêtu d'une couche minérale, telle qu'une couche d'oxyde métallique, durcie par pyrolyse.

Pour éviter que la formation du réseau polyuréthanne élastomérique et/ou la polymérisation du méthacrylate ne commencent avant le moment souhaité, il peut être avantageux d'utiliser un moule constitué d'un matériau permettant d'éviter la photocatalyse de polymérisation de l'un ou l'autre des monomères présents. Le moule utilisé pour la mise en oeuvre du procédé selon la présente invention doit par ailleurs résister à la température maximale du mélange réactionnel et être non réactif ou insoluble au contact de la charge liquide. Des moules appropriés sont réalisés à partir de substances telles que, par exemple, le polyéthylène, le polypropylène, le polyéthylène téréphtalate, des élastomères de silicone et des métaux comme par exemple l'aluminium, le cuivre, le nickel ou des alliages comme le laiton ou l'acier inoxydable. Un moule en métal sera plus particulièrement adapté lorsque le procédé selon l'invention est mis en oeuvre de manière continue, par exemple dans une installation du type laminoir.

Lorsque tous les composants du système sont dans le moule, on soumet celui-ci à des conditions, notamment de température et de pression, telles que le réseau polyuréthanne se forme d'abord par réaction entre les fonctions -OH du polyol et les fonctions N-CO de l'isocyanate puis, lorsque ce réseau est intégralement formé, le méthacrylate de méthyle polymérise dans ledit réseau, formant ainsi ce qu'il est convenu de nommer un réseau interpénétré. En effet les deux réseaux macromoléculaires, celui de polyméthacrylate de méthyle et celui de polyuréthane, sont interpénétrés physiquement et substantiellement sans liaisons chimiques. Bien qu'on ne puisse pas exclure que quelques réactions de transfert intermacromoléculaires n'aient pas lieu, on peut affirmer que, grâce au procédé selon l'invention, ces réactions indésirées sont si peu nombreuses qu'elles n'affectent pas la possibilité d'obtenir simultanément d'excellentes propriétés optiques (en particulier la transparence lumineuse) et une excellente résistance au choc. Des conditions utilisables sont par exemple :

- en ce qui concerne la pression, une pression égale à la pression atmosphérique ou bien une pression pouvant atteindre jusqu'à 5 bars environ, ou encore une pression réduite jusqu'à 0,35 bar environ.

- en ce qui concerne la température, celle-ci pourra être choisie dans une gamme allant de 35°C à 135°C environ lorsque la pression est la pression atmosphérique. La température du moule pourra être augmentée progressivement, par exemple par paliers, à l'intérieur de cette gamme. De manière plus générale, il pourra être avantageux de prévoir un programme de température non uniforme dans le temps, c'est-à-dire comportant plusieurs étapes de différentes durées et conduites à différentes températures.

- en ce qui concerne la durée, une durée totale comprise de préférence entre 4 et 120 heures environ (sous pression atmosphérique) pour des plaques coulées d'épaisseur allant jusqu'à 50 mm.

Le procédé selon la présente invention permet la fabrication de plaques coulées à haute résistance au choc, à base de polyméthacrylate de méthyle, transparentes (la notion de transparence étant ici définie par une transmission lumineuse, selon la norme ASTM D-1003, au moins égale à 91 %) et ayant une épaisseur comprise entre 1,5 et 50 mm environ. De telles plaques présentent un ensemble de propriétés améliorées par rapport aux plaques coulées traditionnelles (c'est-à-dire sans polyuréthanne) en polyméthacrylate de méthyle, notamment en ce qui concerne :

- la résistance au choc, mesurée selon la norme ISO 179: pour une épaisseur de 3 mm, elle passe de 10 kJ/m$^2$ pour une plaque traditionnelle à :

. 100 kJ/m$^2$ pour une plaque coulée selon l'invention comprenant 22 % en poids de polyuréthanne,

. 40 kJ/m$^2$ pour une plaque coulée comprenant 18 % en poids de polyuréthanne, et

. 30 kJ/m$^2$ pour une plaque coulée comprenant 15 % en poids de polyuréthanne.

- les propriétés optiques : pour une épaisseur de 3 mm, le trouble (déterminé selon la norme ASTM D 1003) passe de 4,9 % pour une plaque traditionnelle à 2,9 % pour une plaque conforme à l'invention. Parallèlement la transmission lumineuse (déterminée selon la norme ASTM D-1003) est égale à à 92 % dans les deux cas.

- la résistance au tir de balle : une série d'essais effectués avec différents types de munitions et sur des distances variant de 10 à 50 mètres montre, pour des plaques selon l'invention de 10 mm d'épaisseur, que l'impact de la balle ne produit ni étoilage ni perforation. A épaisseur identique, l'impact de la balle produit l'étoilage d'une plaque de polyméthacrylate traditionnelle et la perforation d'une plaque de polycarbonate.

- l'inflammabilité : pour une épaisseur de 10 mm, l'indice d'oxygène limite (déterminé selon la norme ASTM D 2863) d'une plaque selon l'invention comportant une quantité efficace d'un agent ignifugeant atteint 24,5 % au lieu de 25 % pour une plaque de polycarbonate et 18 % pour une plaque de polyméthacrylate traditionnelle.

En raison de ces nombreuses qualités, les plaques coulées selon l'invention trouvent une application particulièrement importante dans la réalisation de vitrages anti-balles utiles dans les différents secteurs de la sécurité civile. Secondairement, après pliage ou cintrage, ces plaques peuvent également être utilisées dans le domaine de l'orthopédie externe.

Les exemples ci-après ont pour objet d'illustrer la présente invention sans aucune intention limitative. Sauf exception, toutes les quantités sont exprimées en poids.

EXEMPLE 1

Dans une installation telle que celle représentée sur la figure en annexe on prépare, à la température de 20° C environ :

- d'une part une solution comprenant 1,9 partie d'octoate stanneux, 25 parties de méthacrylate de méthyle, 23 parties d'un polyol commercialisé par la société ARCO sous la marque ARCOL 1342 et 2 parties de diacrylate de butanédiol.

- d'autre part une solution comprenant 75 parties de méthacrylate de méthyle, 0,2 partie d'azo-bis-isobutyronitrile, 0,1 partie d'acide stéarique et 3,1 parties d'hexaméthylène diisocyanate trimérisé commercialisé par la société BAYER sous la marque DESMODUR N.

Ces deux solutions sont désaérées puis mélangées intimement avant remplissage du moule. Celui-ci est constitué de plaques de verre trempé et teinté de manière à éviter la photocatalyse (commercialisées par la société SAINT-GOBAIN sous la dénomination ANTELIO), espacées de 4 mm. Après le remplissage, la température du moulé est portée d'abord à 50°C pendant 4 heures puis à 75°C pendant 2 heures et enfin à 95°C pendant 2 heures.

Après avoir laissé refroidir le mélange polymérisé dans le moule, on peut procéder au démoulage vers 30°C.

EXEMPLE 2

Dans une installation telle que celle représentée sur la figure en annexe, on prépare à la température de 22°C, en ajoutant les ingrédients dans le méthacrylate de méthyle sous agitation :

- d'une part une solution comprenant 100 parties de méthacrylate de méthyle, 2 parties de diacrylate de butanediol, 25,9 parties d'un polyol commercialisé par la société ARCO sous la marque ARCOL 1342, 0,5 partie de dibutyl dilaurate d'étain commercialisé par la société AKZO sous la marque STANCLERE TL, 8,6 parties d'un polyol commercialisé par la société DU PONT DE NEMOURS sous la marque TERATHANE 2000, 1,5 partie d'un absorbeur de rayon nement ultraviolet commercialisé par la société CIBA-CEIGY sous la marque TINUVIN 770 DF.

- d'autre part une solution comprenant 100 parties de méthacrylate de méthyle, 0,03 partie d'acide stéarique, 0,015 partie de 2,2'-azobis(2,4-diméthylvaléronitrile), 0,02 partie d'azobis-isobutyronitrile et 5,75 parties d'hexaméthylène diisocyanate trimérisé commercialisé par la société BAYER sous la marque DESMODUR N.

Ces deux solutions sont ensuite désaérées sous une pression absolue de 0,1 bar, puis filtrées sur une toile de maille 0,5μm. Le remplissage du moule s'effectue par l'intermédiaire d'un mélangeur statique précédé de pompes doseuses. Le moule est de même nature que celui utilisé à l'exemple 1, les plaques étant espacées de 12 mm. Après le remplissage, la température du moule est portée d'abord à 60 C pendant 1 heure, puis à 50 C pendant 5 heures et enfin à 90°C pendant 4 heures.

Après avoir laissé refroidir le mélange polymérisé dans le moule, on peut procéder au démoulage à 35°C.

EXEMPLE 3

Dans une installation telle que celle représentée sur la figure en annexe, on prépare à la température de 20° C environ, en ajoutant les ingrédients dans le méthacrylate de méthyle sous agitation :

- d'une part une solution comprenant 38 parties de méthacrylate de méthyle, 2 parties de diacrylate de butanediol, 18,8 parties d'un polyol commercialisé par la société ARCO sous la marque ARCOL 1342, 0,5 partie de dibutyl dilaurate d'étain commercialisé par la société AKZO sous la marque STANCLERE TL, 6,3 parties d'un polyol commercialisé par la société DU PONT DE NEMOURS sous la marque TERATHANE 2000, 1,5 partie d'un absorbeur de rayon nement ultraviolet commercialisé par la société CIBA-GEIGY sous la marque TINUVIN 770 et 0,03 partie de terpinolène commercialisé par la société PROLABO.

- d'autre part une solution comprenant 62 parties de méthacrylate de méthyle, 0,03 partie d'acide stéarique, 0,2 partie de 2,2'-azobis(2,4-diméthylvaléronitrile), 0,1 partie de 1,1'azobis 1-cyclohexanecarbonitrile, 0,1 partie de 2,2'-azobis-isobutyronitrile, 4,2 parties d'hexaméthylène diisocyanate trimérisé commercialisé par la société BAYER sous la marque DESMODUR N et 0,03 partie d'une solution à 1‰ en poids dans le méthacrylate de méthyle de WAXOLINE Pourpre A commercialisé par la société 1.C.1.

Ces deux solutions sont ensuite désaérées sous une pression absolue de 0,1 bar, puis filtrées sur une toile de maille 0,5µm. Le remplissage du moule s'effectue comme à l'exemple 1, les plaques étant espacées de 50 mm. Après le remplissage, la température du moule est portée d'abord à 44°C pendant 30 heures, puis à 48°C pendant 12 heures, puis à 54°C pendant 8 heures et enfin à 95°C pendant 8 heures. Après avoir laissé refroidir le mélange polymérisé dans le moule, on peut procédé au démoulage à 35°C.

## Revendications

1. Procédé de fabrication de plaques coulées à haute résistance au choc, à base de polyméthacrylate de méthyle, comprenant l'introduction dans un moule d'un mélange de méthacrylate de méthyle, d'au moins un initiateur de polymérisation radicalaire, d'au moins un composé organique comportant au moins deux fonctions isocyanates, d'au moins un agent de réticulation du méthacrylate de méthyle, d'au moins un polyol susceptible de constituer un réseau polyuréthanne élastomérique avec les fonctions isocyanates du composé organique et d'au moins un catalyseur susceptible de permettre la formation dudit réseau polyuréthanne, le rapport des composants du réseau polyuréthanne à la somme de ces composants et du méthacrylate de méthyle étant compris entre 5% et 35% en poids, puis la mise en jeu, dans le moule, de conditions de pression et température propres à permettre successivement la formation du réseau polyuréthanne puis la polymérisation du méthacrylate de méthyle dans ledit réseau.

2. Procédé selon la revendication 1, caractérisé en ce que le moule est soumis à des conditions de pression et de température pendant une durée comprise entre 4 et 120 heures.

3. Procédé selon la revendication 2, caractérisé en ce que le mélange introduit dans le moule comprend en outre au moins un agent de démoulage.

4. Procédé selon l'une des revendications 1 à 3, caractérisé en ce que le moule utilisé est constitué d'un matériau permettant d'éviter la photocatalyse de polymérisation de l'un ou l'autre des monomères présents dans le mélange.

5. Procédé selon l'une des revendications 1 à 4, caractérisé en ce que le moule est soumis à une pression comprise entre 0,35 bar et 5 bars.

6. Procédé selon l'une des revendications 1 à 5, caractérisé en ce que le moule est soumis à la pression atmosphérique et à une température comprise entre 35°C et 135°C.

7. Procédé selon l'une des revendications 1 à 6, caractérisé en ce que le moule est soumis à un programme de température non uniforme dans le temps.

8. Procédé selon l'une des revendications 1 à 7, caractérisé en ce que le moule utilisé est constitué d'un verre minéral traité de manière à éviter une réaction entre les fonctions Si-O du verre et les fonctions N-CO de l'isocyanate.

9. Procédé selon la revendication 8, caractérisé en ce que le moule utilisé est constitué d'un verre minéral revêtu d'une couche d'oxyde métallique.

10. Procédé selon l'une des revendications 1 à 9, caractérisé en ce que le catalyseur permettant la formation du réseau polyuréthanne n'est pas susceptible de former un couple Redox avec l'initiateur de polymérisation du méthacrylate de méthyle.

11. Procédé selon l'une des revendications 1 à 10, caractérisé en ce que le catalyseur permettant la formation du réseau polyuréthanne est le dibutyl dilaurate d'étain.

12. Procédé selon l'une des revendications 1 à 10, caractérisé en ce que le catalyseur permettant la formation du réseau polyuréthanne est l'octoate stanneux.

13. Procédé selon l'une des revendications 1 à 12, caractérisé en ce que le catalyseur permettant la formation du réseau polyuréthanne est utilisé dans une proportion comprise entre 0,1 % et 8 % par rapport à la somme du polyol et du composé organique à fonctions isocyanates.

14. Procédé selon l'une des revendications 1 à 13, caractérisé en ce que le polyol a un poids moléculaire au moins égal à 1000.

15. Procédé selon l'une des revendications 1 à 14, caractérisé en ce que le polyol est choisi parmi les polyéthers glycols et les polyesters glycols.

16. Procédé selon l'une des revendications 1 à 15, caractérisé en ce que le composé organique comprenant au moins deux fonctions isocyanates est choisi parmi les diisocyanates de structure

OCN - R - NCO,

dans laquelle R est une chaine alkylène possédant de 4 à 8 atomes de carbone, et leurs oligomères.

17. Procédé selon l'une des revendications 1 à 16, caractérisé en ce que le mélange introduit dans le moule comprend en outre de 0,05 % à 1 % en poids, par rapport au méthacrylate de méthyle, d'au moins un limiteur de chaîne.

18. Procédé selon l'une des revendications 1 à 17, caractérisé en ce que le mélange introduit dans le moule comprend en outre au moins un agent ignifugeant.

19. Procédé selon l'une des revendications 1 à 18, caractérisé en ce que le mélange introduit dans le moule comprend en outre au moins un pigment soluble dans le méthacrylate de méthyle.

20. Procédé selon la revendication 3, caractérisé en ce que l'agent de démoulage est utilisé à raison de 0,1 à 2 % en poids par rapport au méthacrylate de méthyle.

21. Procédé selon l'une des revendications 1 à 20, caractérisé en ce que le mélange introduit dans le moule comprend en outre un comonomère éthyléniquement insaturé copolymérisable avec le méthacrylate de méthyle.

22. Procédé selon la revendication 21, caractérisé en ce que ledit comonomère éthyléniquement insaturé est choisi parmi le styrène, l'α-méthylstyrène, le tertiobutylstyrène, l'acrylate de n-butyle, l'acrylate de 2-éthylhexyle, le méthacrylate de n-butyle, l'acrylate de méthyle, l'acrylate d'éthyle, le méthacrylate d'éthyle et le vinyltoluène.

23. Procédé selon l'une des revendications 21 et 22, caractérisé en ce que ledit comonomère est ajouté en une proportion totale au plus égale à 20 % en poids par rapport au méthacrylate de méthyle.

24. Plaques coulées à haute résistance au choc, transparentes, d'épaisseur comprise entre 1,5 et 50 mm, obtenues par le procédé selon l'une des revendications 1 à 23.

0272975

FIGURE UNIQUE